Europäisches Patentamt

European Patent Office

Office européen des brevets

(19)

(11) Publication number: **0 208 801**
A1

(12) # EUROPEAN PATENT APPLICATION

(21) Application number: **85108910.2**

(22) Date of filing: **16.07.85**

(51) Int. Cl.⁴: **C 04 B 35/58**

(30) Priority: **16.07.85 US 631269**

(43) Date of publication of application: **21.01.87**
**Bulletin 87/4**

(84) Designated Contracting States: **DE FR GB SE**

(71) Applicant: **GTE Products Corporation, 100 West 10th Street, Wilmington, DE 19801 (US)**

(72) Inventor: **Hsieh, Martin Y., 661 E. Meadow Drive, Palo Alto California 94306 (US)**

(74) Representative: **Patentanwälte Grünecker, Kinkeldey, Stockmair & Partner, Maximilianstrasse 58, D-8000 München 22 (DE)**

(54) Corrosion resistant silicon nitride bodies.

(57) Corrosion resistant silicon nitride bodies are produced from a composition of lanthanum oxide, aluminium oxide, and relatively impure silicon nitride.

EP 0 208 801 A1

D-83-2-166

## CORROSION RESISTANT SILICON NITRIDE BODIES

### BACKGROUND OF THE INVENTION

This invention relates to a process for producing corrosion resistant silicon nitride bodies. More particularly, it provides a silicon nitride composition from which corrosion resistant silicon nitride bodies can be produces.

In general, silicon nitride by itself has limited usage. In order to produce materials for turbines, cutting tools, wear parts and the like, composites are needed which can be pressed to give bodies with special properties such as corrosion resistance. Presently yttria and alumina are used with silicon nitride to produce bodies of corrosion resistance.

This invention involves the use of lanthana and alumina with silicon nitride as a composition which when pressed and sintered produces a body of better corrosion resistance than that which is produced by the yttria-alumina-silicon nitride powder.

### SUMMARY OF THE INVENTION

In accordance with one aspect of this invention there is provided a silicon nitride body consisting essentially of, in percent by weight: from about 3% to about 18% lanthanum oxide, from about 0.5% to about 5% aluminum oxide, up to about 2% iron, up to about 0.25% each of carbon, calcium, aluminum or their oxides, and the balance silicon nitride. The body has a relatively high resistance to phosphoric acid corrosion.

## DETAILED DESCRIPTION OF THE INVENTION

For a better understanding of the present invention, together with other and further objects, advantages, and capabilities thereof, reference is made to the following disclosure and appended claims in connection with the foregoing description of some of the aspects of the invention.

The silicon nitride composition of this invention consists essentially of silicon nitride and sintering aids such as lanthanum oxide, mixtures of lanthanum oxide and aluminum oxide, lanthanum aluminate and mixtures of lanthanum aluminate with either lanthanum oxide or aluminum oxide or both. The composition of this invention consists essentially in percent by weight: from about 3% to about 18% lanthanum oxide, from about 0.5% to about 5% aluminum oxide and the balance silicon nitride. A preferred composition consists essentially of in percent by weight: from about 3% to about 15% lanthanum oxide, from about 1% to about 5% aluminum oxide and the balance silicon nitride with a preferred atomic ratio of lanthanum to aluminum of about 1 to 1.

Still another preferred composition consists essentially of in percent by weight: from about 3% to about 12% lanthanum oxide, from about 0.5% to about 4% aluminum oxide and the balance silicon nitride.

A procedure for forming lanthanum aluminate is set forth in U.S. Patent Application SN attorney's docket No. 83-2-119, filed and assigned to the same assignee as this application. That patent application is hereby incorporated by reference.

0208801

Mixtures of the above sintering aids can be used, for example, lanthanum oxide or aluminum oxide with lanthanum aluminate. The silicon nitride which is used is relatively impure. A typical composition of silicon nitride is as follows of in percent by weight: from about .05% to about 0.25% carbon, from about .05% to about 0.25% calcium or calcium oxide, from about .05% to about 0.25% aluminum or aluminum oxide, up to about 2% iron or iron oxide, and the balance silicon nitride. Such a material is currently supplied by Nippon Denko. The admixture of the relatively impure silicon nitride and the other components is formed by any conventional method such as ball milling, blending and the like which will result in a uniform homogeneous mixture. The admixture is then pressed and sintered by conventional methods to form a silicon nitride body. Copending application SN , attorney's docket No. 83-2-129 filed discloses a suitable process and is hereby concurrently herewith discloses a suitable process and is hereby incorporated by reference. The resulting silicon nitride body has a relatively high resistance to phosphoric acid corrosion.

To more fully illustrate this invention, the following non-limiting examples are presented. All parts, portions, and percentages are on a weight basis unless otherwise stated.

## EXAMPLE

Parts of silicon nitride of the following compositions with Nippon Denko silicon nitride are weighed, immersed in about 86% phosphoric acid for about seven days and weighed after the immersion period. The degree of corrosion is measured by the weight loss of the parts given below.

| Part # | Composition Balance Silicon Nitride | Weight Loss mg |
|---|---|---|
| 1 | 3.5% $Al_2O_3$<br>13% $Y_2O_3$ | 53 |
| 2 | 6% $LaAlO_3$ (Equivalent to 4.5% $La_2O_3$, 1.5% $Al_2O_3$) | 1.5 |
| 3 | 8% $LaAlO_3$ (Equivalent to 6% $La_2O_3$, 2% $Al_2O_3$) | 4.2 |
| 4 | 12% $LaAlO_3$ (Equivalent to 9% $La_2O_3$, 3% $Al_2O_3$) | 8.4 |
| 5 | 13% $LaAlO_3$ (Equivalent to 9.75% $La_2O_3$, 3.25% $Al_2O_3$) | 7.3 |
| 6 | 14% $LaAlO_3$ (Equivalent to 10.5% $La_2O_3$.3.5% $Al_2O_3$) | 10.5 |
| 7 | 15% $LaAlO_3$ (Equivalent to 11.25% $La_2O_3$)3.75% $Al_2O_3$) | 9.0 |
| 8 | 16% $LaAlO_3$ (Equivalent to 12% $La_2O_3$, 4% $Al_2O_3$) | 10.7 |
| 9 | 20% $LaAlO_3$ (Equivalent to 15% $La_2O_3$, 5% $Al_2O_3$) | 10.0 |

The results show that the parts with lanthanum oxide had less weight loss than the part with yttrium oxide indicating that the parts with lanthanum oxide are more resistant to phosphoric acid corrosion than the part with yttrium oxide.

While there has been shown and described what are at present considered the preferred embodiments of the invention, it will be obvious to those skilled in the art that various changes and modifications may be made therein without departing from the scope of the invention as defined by the appended claims.

- 4 -

D-83-2-166

What is claimed:

1. A silicon nitride body consisting essentially of, in percent by weight: from about 3% to about 18% lanthanum oxide, from about 0.5% to about 5% aluminum oxide, up to about 2% iron, and up to about 0.25% each of carbon, calcium, aluminum or their oxides, and the balance silicon nitride, said body having a relatively high resistance to phosphoric acid corrosion.

2. A silicon nitride body according to Claim 1 consisting essentially of, in percent by weight: from about 1% to about 5% aluminum oxide, from about 3% to about 15% lanthanum oxide and the balance silicon nitride, and the atomic ratio of lanthanum to aluminum of about 1 to 1.

3. A silicon nitride body according to Claim 1 consisting essentially, of in percent by weight: from about 0.5 to about 4% aluminum oxide, from about 3% to about 12% lanthanum oxide and the balance silicon nitride.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 409 003  (V.K. SARIN et al.) <br> * claims 1,7,8 * <br><br> ----- | | C 04 B  35/58 |
| | | | **TECHNICAL FIELDS SEARCHED (Int. Cl.4)** |
| | | | C 04 B  35/58 |

The present search report has been drawn up for all claims

| Place of search | Date of completion of the search | Examiner |
|---|---|---|
| BERLIN | 11-10-1985 | STROUD J.G. |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO Form 1503 03 82